# EUROPÄISCHE PATENTSCHRIFT

(11) **EP 2 962 022 B1**
(45) Veröffentlichungstag und Bekanntmachung des Hinweises auf die Patenterteilung: **01.02.2017**
(21) Anmeldenummer: 14705043.9
(22) Anmeldetag: 15.02.2014
(51) Int. Cl.: F16K 15/02, F16K 15/06, F16K 17/04

(54) **ÜBERSTRÖMVENTIL**
OVERFLOW VALVE
SOUPAPE DE TROP-PLEIN

(30) Priorität: 28.02.2013 DE 102013003405
(43) Veröffentlichungstag der Anmeldung: 06.01.2016
(73) Patentinhaber: WABCO GmbH, 30453 Hannover (DE)
(72) Erfinder: DIEKMEYER, Heinrich, 30890 Barsinghausen (DE); KRAUS, Hauke, 30455 Hannover (DE)
(74) Vertreter: Lauerwald, Jörg
(86) Internationale Anmeldenummer: PCT/EP2014/000419
(87) Internationale Veröffentlichungsnummer: WO 2014/131495

(56) Entgegenhaltungen:
- DE-A1-102010 047 401
- GB-A- 612 344
- US-A- 3 770 008

## Beschreibung

Die Erfindung betrifft ein Überströmventil für ein gasförmiges Fluid, beispielsweise in einem druckluftbetriebenen Bremssystem eines Kraftfahrzeugs, mit einem mittels einer Druckfeder vorgespannten Kolben, der entlang einer Längsmittelachse verschiebbar in einem Zylindereinsatz aufgenommen ist.

Überströmventile kommen in der Drucklufttechnik verbreitet zum Einsatz, beispielsweise um während eines Druckabfalls in einer Leitung der Druck im restlichen Druckluftsystem aufrechtzuerhalten. Aus der DE 10 2010 047 401 A1 ist beispielsweise ein als Druckbegrenzungsventil ausgeführtes Ventil mit einem Einlass und einem Auslass für ein Fluid bekannt. Sobald der erforderliche Öffnungsdruck des Ventils erreicht ist, bewegt sich ein kolbenförmiger Dichtkörper unter dem Einfluss des Fluiddrucks entgegen der Rückstellkraft eines Federelements in eine Öffnungsstellung, um ein weitgehend ungehindertes Durchströmen des Fluids durch die Öffnung zu ermöglichen. Im Zuge des Öffnungsvorgangs vergrößert sich zugleich die wirksame Gesamtfläche des Dichtkörpers, auf die der Fluiddruck einwirkt. Infolge dieses Verstärkungseffektes ergibt sich ein verbessertes, insbesondere ein schnelleres Ansprechen des Ventils. Von Nachteil ist unter anderem, dass der Dichtkörper innerhalb des hohlzylindrischen Ventilgehäuses verkippen und sich hierdurch schlimmstenfalls im Zylinder verklemmen kann, welches unter Umständen zu einer Fehlfunktion des Überströmventils führt. Darüber hinaus können aufgrund der nicht vorhandenen radialen Abdichtung des Dichtkörpers gegenüber der Zylinderwand im Fall von Undichtigkeiten der axialen Abdichtung geringfügige Leckagen auftreten.

Ferner sind Überströmventile bekannt, bei denen eine axiale und radiale Abdichtung eines Ventilkolbens gegenüber einem Zylinder mit zwei separaten und speziell ausgeformten Dichtungen erfolgt, wodurch unter anderem die Teileanzahl, der Montageaufwand, die Baugröße und damit einhergehend das Gesamtgewicht solcher Druckbegrenzungsventile vergleichsweise groß ist.

Der Erfindung liegt daher die Aufgabe zugrunde, ein derartiges Überströmventil mit einer verringerten Teileanzahl und einem hierdurch vereinfachten konstruktiven Aufbau vorzustellen.

Die Erfindung betrifft daher ein Überströmventil für ein gasförmiges Fluid, beispielsweise in einem druckluftbetriebenen Bremssystem eines Kraftfahrzeugs, mit einem mittels einer Druckfeder vorgespannten Kolben, der entlang einer Längsmittelachse verschiebbar in einem Zylinder des Überströmventils aufgenommen ist. Zur Lösung der gestellten Aufgabe ist vorgesehen, dass an einer Unterseite des Kolbens ein Dichtring zur radialen und axialen Abdichtung angeordnet ist, dass die radiale Außenseite des Dichtrings unter Schaffung eines radialen Presssitzes innenseitig am Zylinder anliegt, dass der Dichtring in einem geschlossenen Zustand des Überströmventils infolge der Vorspannung der Druckfeder an einem hohlzylindrischen Ventilsitz anliegt, und dass der Dichtring in einem geöffneten Zustand des Überströmventils nach Überschreiten eines vorgegebenen Grenzdrucks des Fluids vom Ventilsitz unter Schaffung eines Ringspaltes abgehoben ist, um einen Strömungsweg für das Fluid freizugeben.

Durch diesen Aufbau wird sowohl die radiale als auch die axiale Abdichtung des Überströmventils mit nur einem Dichtring erreicht. Ein bisher notwendiger, weiterer, speziell gestalteter Dichtring zur radialen Abdichtung, beispielsweise in Form eines
"AirZet^{®}"-Rings, entfällt, wodurch sich der konstruktive Aufbau und die Montage des Überströmventils erheblich vereinfachen sowie die Herstellkosten verringern. Beim
Überschreiten des Fluiddrucks über einen voreingestellten Druckgrenzwert nimmt das Überströmventil seine Öffnungsstellung ein, in der das Fluid einen nun freigegebenen Strömungsweg weitgehend ungehindert durchströmen kann. Unterschreitet der Fluiddruck hingegen den vorgegebenen Druckgrenzwert,
wobei ein Hysteresewert geeigneter Höhe vorgesehen sein kann, wechselt das Überströmventil in seine Schließstellung, in welcher der Strömungsweg abgesperrt ist. Infolge eines Zylindereinsatzes (Zylinderbuchse), auf den weiter unten noch eingegangen wird und der gemäß einer Ausführungsform der Erfindung in eine topfförmige Ausnehmung des Gehäuses des Überströmventils eingesetzt sein kann, reduzieren sich zudem die Anforderungen an die Fertigungsgenauigkeit des Gehäuses des Überströmventils beträchtlich.

Bei einer bevorzugten Ausgestaltung des Überströmventils ist vorgesehen, dass die radiale Außenseite des Dichtrings eine näherungsweise halbkreisförmige Querschnittsgeometrie aufweist. In Folge der halbkreisförmigen Querschnittsgeometrie der Außenseite des Dichtrings ergibt sich eine vergleichsweise geringe Kontaktfläche zur Innenwand des Zylindereinsatzes, wodurch die Reibung zwischen diesen beiden Reibpartnern verringert und das Ansprechverhalten des Überströmventils weiter optimiert ist.

Eine andere vorteilhafte Weiterbildung sieht vor, dass im Bereich einer axialen Unterseite des Dichtrings zumindest abschnittweise eine Ringnut ausgebildet ist. Hierdurch entsteht insbesondere bei einem radial leicht übermäßigen Dichtring im verbauten Zustand innerhalb des Dichtrings eine radiale Druck- bzw. Kraftwirkung, die es ermöglicht, etwaige Verschleißerscheinungen, wie beispielsweise Abrieb im Bereich seiner Außenseite, durch eine radiale Expansion des Dichtrings auszugleichen und damit die Standzeit des Überströmventils zu erhöhen.

Gemäß einer anderen Ausgestaltung weist der Kolben mindestens eine koaxial zur Längsmittelachse ausgebildete und radial nach außen hin offene Ringnut auf. Hierdurch ist die zwischen dem Kolben und dem Zylindereinsatz wirksame Reibungsfläche weiter verkleinert und das Ansprechverhalten des Überströmventils zusätzlich verbessert. Zugleich kann hierdurch die Masse des Kolbens vergleichsweise klein gehalten werden.

Eine weitere Ausgestaltung sieht vor, dass der Dichtring kreisringförmig ausgebildet ist und mittels seiner radial innen ausgebildeten kreisförmigen Öffnung auf einem hohlzylindrischen Fortsatz des Kolbens fest aufgenommen ist, der im Bereich der Kolbenunterseite ausgebildet ist sowie eine mit dem Kolben einstückig verbundene Kolbenstange koaxial umgibt. Hierdurch ist der Dichtring in Bezug zur Längsmittelachse des Überströmventils präzise zentriert, wobei zugleich ein zuverlässiger mechanischer Sitz des Dichtrings an dem Kolben gegeben ist.

Eine andere Weiterbildung sieht vor, dass die radial innere Öffnung des Dichtrings zumindest abschnittweise von einer keilförmigen oder quaderförmigen Aufdickung umgeben ist. Diese Aufdickung erstreckt sich im montierten Zustand im Wesentlichen axial entlang des Fortsatzes des Kolbens. Infolge dieser mechanischen Randverstärkung der radial inneren Öffnung des Dichtrings ist ein fester und zuverlässiger Sitz desselben auf dem Fortsatz des Kolbens an dessen Kolbenunterseite gegeben.

Weiter kann vorgesehen sein, dass die Druckfeder innerhalb einer topfförmigen Abdeckung des Überströmventils angeordnet ist, und dass der Kolben mittels der Druckfeder axial vorgespannt angeordnet ist, wobei die Vorspannung der Druckfeder mittels einer auf die Druckfeder wirkende Stellschraube einstellbar ist. Hierdurch kann ein Grenzwert eines Fluiddrucks, ab dem das Überströmventil in den geöffneten Zustand übergeht, exakt und stufenlos eingestellt werden.

Der Zylinder im Überströmventil, an dessen Wand sich der Kolben radial abstützt und durch die der Kolben bei seiner Bewegung axial geführt wird, kann gemäß einer ersten Ausführungsform durch eine topfförmige Ausnehmung im Gehäuse des Überströmventils gebildet sein. Alternativ dazu kann vorgesehen sein, dass der Zylinder im Überströmventil durch einen hohlzylindrischen Zylindereinsatz gebildet ist, der in die topfförmige Ausnehmung im Gehäuse des Überströmventils koaxial eingesetzt ist und den Kolben führt. Diese letzte Variante ermöglicht eine wesentlich kostengünstige Bearbeitung der topfförmigen Ausnehmung des Gehäuses des Überströmventils.

Entsprechend einer Ausgestaltung weist der Zylindereinsatz axial fern von der Druckfeder einen Widerlagerabschnitt auf, dem ein Druckbegrenzer mit einem Einlass für das Fluid vorgeschaltet ist. Mittels dieses Druckbegrenzers wird der am Überströmventil maximal anstehende Fluiddruck limitiert und damit eine mechanische Überlastung einzelner Komponenten des Überströmventils sowie der dem Überströmventil nachgeordneten Druckluftgeräte zuverlässig verhindert.

Gemäß einer anderen Weiterbildung ist vorgesehen, dass der Zylindereinsatz zusammen mit dem Kolben sowie der Druckbegrenzer axial übereinander beziehungsweise hintereinander in einer topfförmigen Ausnehmung des Gehäuses des Überströmventils angeordnet sind, und dass die ebenfalls topfförmige Abdeckung zur Aufnahme der Druckfeder die topfförmige Ausnehmung des Gehäuses deckelartig verschließt. Hierdurch ergibt sich eine Bauraum sparende, im Wesentlichen längs gestreckte Bauform des Überströmventils, die zugleich eine kostengünstige Montage erlaubt. Die Ausnehmung innerhalb des Gehäuses ist bevorzugt durch eine fertigungstechnisch einfache sowie mit hoher Genauigkeit herzustellende Stufenbohrung gebildet.

Entsprechend einer anderen Ausgestaltung weist der Zylinder beziehungsweise der Zylindereinsatz mindestens zwei Auslässe für das Fluid auf. Hierdurch ist ein hinreichend großer Auslassquerschnitt für das abzuführende Fluid vorhanden. Das Fluid ist ein gasförmiges Medium, insbesondere Luft. Hierdurch ist das Überströmventil vorrangig zur Verwendung in pneumatischen Anlagen geeignet.

Schließlich sei darauf hingewiesen, dass der Dichtring beispielsweise aus einem Elastomer auf der Basis eines hydrierten Acrylnitrilbutadien-Kautschuks besteht. Aufgrund des bevorzugt eingesetzten hydrierten Acrylnitrilbutadien-Kautschuks (HNBR) ergibt sich eine ausgezeichnete Abdichtungswirkung des Überströmventils bei einer zugleich hohen Verschleißfestigkeit des Ventilsitzelastomers.

Zum besseren Verständnis der Erfindung ist der Beschreibung die Zeichnung eines Ausführungsbeispiels beigefügt. In dieser zeigt
Fig. 1 einen Längsschnitt durch das Überströmventil gemäß der Erfindung in seiner Schließstellung, und
Fig. 2 das Überströmventil gemäß Fig. 1 in seiner zumindest teilweise geöffneten Stellung.

Das Überströmventil 10 für ein nicht dargestelltes, bevorzugt gasförmiges Fluid wie z.B. Luft, umfasst unter anderem ein Gehäuse 12 mit einer in der Art einer Stufenbohrung symmetrisch zu einer Längsmittelachse 14 in das Gehäuse 12 eingebrachten topfförmigen Ausnehmung 16. Innerhalb dieser Ausnehmung 16 sind ein Zylindereinsatz 18 und ein Druckbegrenzer 20 axial hintereinander angeordnet. Der Zylindereinsatz 18 sitzt dabei radial außen auf einer radial nach innen ragenden Stufe der topfförmigen Ausnehmung 16 des Gehäuses 12 sowie mittels seines druckbegrenzernahen Widerlagerabschnitts 22 auf einem bodenfernen Ende des Druckbegrenzers 20. Zwischen dem Zylindereinsatz 18 und der Ausnehmung 16 des Gehäuses 12 sind exemplarisch drei O-Ringe 24, 24', 24" zur Abdichtung angeordnet.

Im Zylindereinsatz 18 ist ein längssymmetrischer und im Wesentlichen zylindrischer Kolben 26 koaxial zur Längsmittelachse 14 axial verschiebbar aufgenommen. Der Kolben 26 wird an seinem von Druckbegrenzer 20 fernen Ende mittels einer Druckfeder 28 mit einer Federkraft belastet. Die beiden nicht bezeichneten axialen Enden der Druckfeder 28 sind jeweils mit einer Kappe 30, 32 bedeckt. Die obere Kappe 30 stützt sich an einer Stellschraube 34 ab, die zur Regulierung der mechanischen Vorspannung der Druckfeder 28 dient und um die Längsmittelachse 14 verdrehbar in einer als Deckel dienenden und ebenfalls topfförmigen Abdeckung 36 aufgenommen ist. Mittels dieser topfförmigen Abdeckung 36 ist die Ausnehmung 16 des Gehäuses 12 federseitig verschlossen. Die untere Kappe 32 mit einer gewellten Querschnittsgeometrie stützt sich an einer Oberseite 38 des Kolbens 26 ab. Die beiden Kappen 30, 32 dienen insbesondere zur Lagesicherung und Führung der Druckfeder 28 zwischen der Stellschraube 34 und dem Kolben 26.

Die Nutzung des Zylindereinsatzes 18 ist zwar vorteilhaft, jedoch zur Funktionsfähigkeit eines gemäß der Erfindung ausgebildeten Überströmventils 10 nicht zwingend notwendig. Diese Bauform ist hier nur beispielhaft dargestellt.

An einer radial äußeren Kolbenunterseite 40 liegt ein näherungsweise kreisringförmiger Dichtring 42 an. Der Dichtring 42 wird im dargestellten geschlossenen Zustand des Überströmventils 10 aufgrund der Kraftwirkung der Druckfeder 28 gegen einen näherungsweise hohlzylindrisch geformten Ventilsitz 44 des Zylindereinsatzes 18 gepresst. Eine dem Dichtring 42 zugewandte, nicht bezeichnete, umlaufende obere Kante des Ventilsitzes 44 weist bevorzugt eine ungefähr halbkreisförmige Querschnittsgeometrie auf. Der Dichtring 42 ist bevorzugt aus einem stark beanspruchbaren Elastomer hergestellt, beispielsweise aus einen hydrierten Acrylnitrilbutadien-Kautschuk ("HNBR").

Um die Gleitreibung des Kolbens 26 im Zylindereinsatz 18 weiter zu verringern, kann in den Kolben 26 eine bevorzugt umlaufende, radial nach außen hin offene Ringnut 46 mit einer rechteckförmigen Querschnittsgeometrie eingelassen sein.

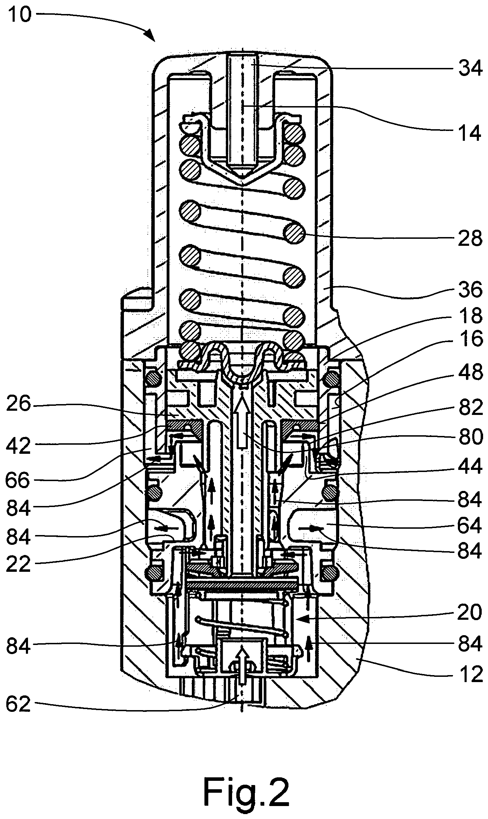

Die radiale Außenseite 48 des Dichtrings 42 weist in der Darstellung der Fig. 2 eine in etwa halbkreisförmige Querschnittsgeometrie auf und liegt zur Abdichtung unter Schaffung einer bevorzugt leichten radialen Presspassung radial innenseitig am Zylindereinsatz 18 an.

Im Bereich einer axialen Unterseite 50 des Dichtrings 42, also an der vom Kolben 26 weggerichteten Seite des Dichtrings 42, ist darüber hinaus eine kleine, umlaufende Ringnut 52 beziehungsweise Rille mit einer viereckigen, im Bereich des Nutgrundes jedoch gekrümmten Querschnittsgeometrie ausgebildet. Mittels dieser Ringnut 52 beziehungsweise Rille lässt sich, insbesondere im geöffneten Zustand des Überströmventils 10, bei einem geringen radialen Übermaß des montierten Dichtrings 42 eine radiale Kraftwirkung desselben erzeugen, um insbesondere etwaige Verschleißerscheinungen, wie zum Beispiel Abrieb an der Außenseite 48 des Dichtrings 42, durch eine radiale Expansion desselben zu kompensieren. Die radiale Kraftwirkung wird hierbei unter anderem durch den anstehenden Fluiddruck hervorgerufen.

Die halbkreisförmige Außenseite 48 des Dichtrings 42 stellt im Zusammenspiel mit dem Zylindereinsatz 18 die radiale Abdichtung des Überströmventils 10 dar, wohingegen die axiale Abdichtung des Überströmventils 10 durch das Zusammenwirken des Dichtrings 42 mit dem Ventilsitz 44 realisiert ist. Hierdurch entfällt die bei vorbekannten Überströmventilen ansonsten notwendige zusätzliche radiale Dichtung, die bei einem der Anmelderin bekannten Überströmventil beispielsweise durch die Anordnung eines "AirZet^{®}"-Ringes realisiert ist.

Der Dichtring 42 verfügt ferner über eine radial innen angeordnete kreisförmige Öffnung 54, die auf einen unterseitigen hohlzylindrischen Fortsatz 56 des Kolbens 26 fest aufgeschoben ist, der sich im Bereich der Kolbenunterseite 40 befindet und der eine rohrförmige Kolbenstange 58 des Kolbens 26 koaxial umschließt.

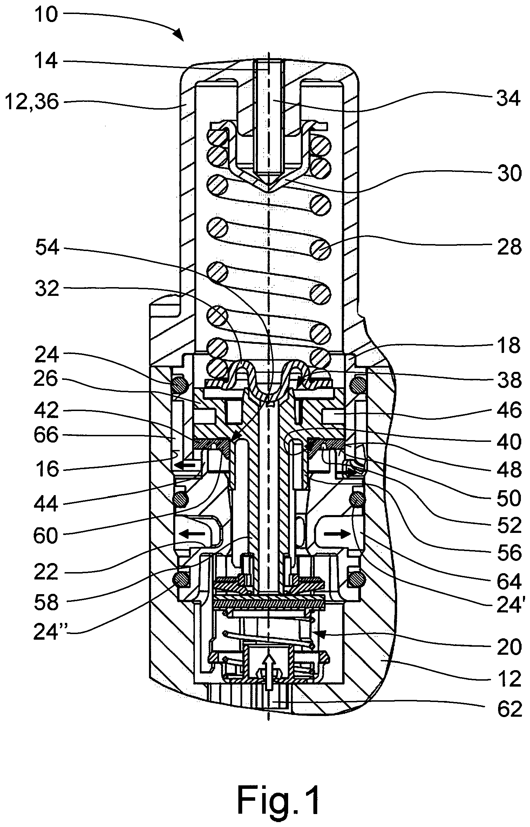

Zur weiteren Erhöhung der mechanischen Stabilität des Dichtrings 42 sowie zur Optimierung des mechanischen Sitzes auf dem hohlzylindrischen Fortsatz 56 des Kolbens 26 ist die kreisförmige Öffnung 54 des Dichtrings 42 in den dargestellten Ausführungsbeispielen der Figuren 1 und 2 von einer umlaufenden Aufdickung 60 eingefasst, die hier exemplarisch eine keilförmige Querschnittsgeometrie aufweist, und deren radiale Dicke in Richtung zu dem Druckbegrenzer 20 hin abnimmt.

Für die Zuführung des nicht dargestellten Fluids verfügt der Druckbegrenzer 20 über einen Einlass 62, wobei die Eintrittsrichtung des Fluids mit einem kleinen weißen Pfeil im Einlass 62 angedeutet ist. Im Bereich des Widerlagerabschnitts 22 des Zylindereinsatzes 18 befindet sich ein erster Auslass 64, der dem Druckbegrenzer 20 zugeordnet ist, und im Bereich des Ventilsitzes 44 des Zylindereinsatzes 18 ist ein zweiter Auslass 66 für das Fluid vorgesehen, welcher der Überströmfunktion zugeordnet ist. Die mögliche Strömungsrichtung ist jeweils mit einem kleinen schwarzen Pfeil angedeutet. Die insgesamt vier schwarzen Pfeile sind der besseren zeichnerischen Übersicht halber nicht mit einer Bezugsziffer versehen. Aufgrund der beiden genannten Auslässe 64 und 66 ist ein hinreichender Strömungsquerschnitt für das aus dem Überströmventil 10 abzuführende Fluid gegeben.

Fig. 2 zeigt das Überströmventil gemäß Fig. 1 in einem zumindest teilweise geöffneten Zustand. Das Überströmventil 10 umfasst wiederum das Gehäuse 12 mit der zentrisch zur Längsmittelachse 14 angeordneten topfförmigen Ausnehmung 16, in welcher der Druckbegrenzer 20 und der Zylindereinsatz 18 mit seinem unterseitig ausgebildeten Widerlagerabschnitt 22 untergebracht sind. Im Zylindereinsatz 18 ist der mittels der Druckfeder 28 vorgespannte Kolben 26 parallel zur Längsmittelachse 14 verschiebbar aufgenommen. Das nicht dargestellte Fluid tritt wiederum von unten über den Einlass 62 des Druckbegrenzers 20 in das Überströmventil 10 ein.

Im Gegensatz zur Darstellung in Fig. 1 ist der Kolben 26 in Fig. 2 aufgrund des einen vorgegebenen Grenzwert überschreitenden Fluiddrucks entgegen der Federkraft der Druckfeder 28 in Richtung des großen weißen Pfeils 80 axial verschoben. Hierdurch ist der Dichtring 42 vollständig vom Ventilsitz 44 abgehoben. Dadurch gibt der Dichtring 42 einen schmalen Ringspalt 82 frei, so dass das Fluid entlang eines Strömungsweges 84, wie mit der Vielzahl von kleinen schwarzen Pfeilen angedeutet, weitgehend ungehindert durch das Überströmventil 10 hindurchfließen kann. Hierbei tritt das Fluid durch den bodenseitigen Einlass 62 im Bereich des Druckbegrenzers 20 in das Überströmventil 10 ein und wird im Wesentlichen entlang des durch die kleinen schwarzen Pfeile veranschaulichten Strömungsweges 84 durch das Überströmventil 10 hindurch geführt, um anschließend im Bereich des ersten Auslasses 64 und des zweiten Auslasses 66 aus diesem auszutreten. Durch den Strömungsweg 84 ist der Einlass 62 im geöffneten Zustand des Überströmventils 10 demnach mit den beiden Auslässen 64, 66 verbunden. Der besseren zeichnerischen Übersicht halber ist die Vielzahl der den Strömungsweg 84 repräsentierenden kleinen schwarzen Pfeile nicht durchgehend mit der zugehörigen Bezugsziffer 84 versehen worden.

Steigt der Fluiddruck weiter an, so bewegt sich der Kolben 26 solange weiter in Richtung zur Druckfeder 28, bis der Druckbegrenzer 20 seine Endstellung erreicht hat sowie über einen zweiten Ventilsitz im Zylindereinsatz 18 den Einlass 62 von den beiden Auslässen 64, 66 trennt und somit den Druck in den Auslässen 64, 66 sowie in den mit diesen verbundenen Leitungen auf einen vorbestimmten Druck begrenzt.

Sinkt der Fluiddruck wieder unter den voreingestellten Grenzwert, wobei vorzugsweise zur Vermeidung von Schwingungserscheinungen noch eine Hystereseschwelle zu unterschreiten ist, kehrt sich der vorstehend beschriebene Vorgang um und der Dichtring 42 kommt aufgrund der hohen Federkraft der Druckfeder 28 wieder zur festen Anlage an den Ventilsitz 44, womit sich das Überströmventil 10 im geschlossenen Zustand befindet. In dieser Schließstellung des Überströmventils 10 ist der Strömungsweg 84 durch den am Ventilsitz 44 anliegenden Dichtring 42 wieder unterbrochen, so dass der Fluiddruck erneut bis auf den vorgegebenen Grenzwert ansteigen kann, bis das Überströmventil 10 gegebenenfalls erneut in seine Öffnungsstellung schaltet.

Mithilfe der Stellschraube 34, die in einem Gewinde drehbar in der Abdeckung 36 der Ausnehmung 16 des Gehäuses 12 angeordnet ist, kann die Vorspannung der Druckfeder 28 feinfühlig reguliert und damit der vorgegebene Grenzwert des Fluiddrucks zum Öffnen des Überströmventils 10 exakt eingestellt werden.

Bezugszeichen
- 10: Überströmventil
- 12: Gehäuse
- 14: Längsmittelachse
- 16: Zylinder des Überströmventils, Ausnehmung im Gehäuse
- 18: Zylinder des Überströmventils, Zylindereinsatz
- 20: Druckbegrenzer
- 22: Widerlagerabschnitt
- 24, 24', 24": O-Ringe
- 26: Kolben
- 28: Druckfeder
- 30: Obere Kappe
- 32: Untere Kappe
- 34: Stellschraube
- 36: Abdeckung des Gehäuses
- 38: Kolbenoberseite
- 40: Radial äußere Kolbenunterseite
- 42: Dichtring
- 44: Ventilsitz
- 46: Radiale Ringnut am Kolben
- 48: Außenseite des Dichtrings
- 50: Unterseite des Dichtrings
- 52: Ringnut an der Unterseite des Dichtrings
- 54: Kreisförmige Öffnung im Dichtring
- 56: Hohlzylindrischer Fortsatz am Kolben
- 58: Kolbenstange
- 60: Aufdickung am Dichtring
- 62: Einlass
- 64: Erster Auslass
- 66: Zweiter Auslass
- 80: Pfeil, axiale Verstellung des Kolbens 26
- 82: Ringspalt im Strömungsweg
- 84: Strömungsweg in Öffnungsstellung

## Patentansprüche

1. Überströmventil (10) für ein gasförmiges Fluid, beispielsweise in einem druckluftbetriebenen Bremssystem eines Kraftfahrzeugs, mit einem mittels einer Druckfeder (28) vorgespannten Kolben (26), der entlang einer Längsmittelachse (14) verschiebbar in einem Zylinder (16, 18) des Überströmventils (10) aufgenommen ist, **dadurch gekennzeichnet, dass** an einer Kolbenunterseite (40) ein Dichtring (42) zur radialen und axialen Abdichtung angeordnet ist, dass die radiale Außenseite (48) des Dichtrings (42) unter Schaffung eines radialen Presssitzes innenseitig am Zylinder (16, 18) anliegt, dass der Dichtring (42) in einem geschlossenen Zustand des Überströmventils (10) infolge der Vorspannung der Druckfeder (28) an einem hohlzylindrischen Ventilsitz (44) anliegt, und dass der Dichtring (42) in einem geöffneten Zustand des Überströmventils (10) nach Überschreiten eines vorgegebenen Grenzdrucks des Fluids vom Ventilsitz (44) unter Schaffung eines Ringspaltes (82) abgehoben ist, um einen Strömungsweg (84) für das Fluid freizugeben.

2. Überströmventil nach Anspruch 1, **dadurch gekennzeichnet, dass** die Außenseite (48) des Dichtrings (42) eine näherungsweise halbkreisförmige Querschnittsgeometrie aufweist.

3. Überströmventil nach Anspruch 1 oder 2, **dadurch gekennzeichnet, dass** im Bereich einer Unterseite (50) des Dichtrings (42) zumindest abschnittweise eine Ringnut (52) ausgebildet ist.

4. Überströmventil nach einem der Ansprüche 1 bis 3, **dadurch gekennzeichnet, dass** der Kolben (26) mindestens eine koaxial zur Längsmittelachse (14) ausgebildete und radial nach außen hin offene Ringnut (46) aufweist.

5. Überströmventil nach einem der Ansprüche 1 bis 4, **dadurch gekennzeichnet, dass** der Dichtring (42) kreisringförmig ausgebildet ist und mittels seiner radial innen ausgebildeten kreisförmigen Öffnung (54) auf einem hohlzylindrischen Fortsatz (56) des Kolbens (26) aufgenommen ist, der (56) im Bereich der Kolbenunterseite (40) ausgebildet ist und eine mit dem Kolben (26) einstückig verbundene Kolbenstange (58) koaxial umgibt.

6. Überströmventil nach Anspruch 5, **dadurch gekennzeichnet, dass** die radial innere Öffnung (54) des Dichtrings (42) zumindest abschnittweise von einer keilförmigen oder quaderförmigen Aufdickung (60) umgeben ist.

7. Überströmventil nach einem der Ansprüche 1 bis 6, **dadurch gekennzeichnet, dass** der Zylinder im Überströmventil (10) durch eine topfförmige Ausnehmung (16) im Gehäuse (12) des Überströmventils (10) gebildet ist.

8. Überströmventil nach einem der Ansprüche 1 bis 6, **dadurch gekennzeichnet, dass** der Zylinder im Überströmventil (10) durch einen hohlzylindrischen Zylindereinsatz (18) gebildet ist, der in eine topfförmige Ausnehmung (16) des Gehäuses (12) des Überströmventils (10) koaxial eingesetzt ist.

9. Überströmventil nach einem der Ansprüche 1 bis 8, **dadurch gekennzeichnet, dass** die Druckfeder (28) innerhalb einer Abdeckung (36) des Gehäuses (12) des Überströmventils (10) angeordnet ist, und der dass Kolben (26) mittels der Druckfeder (28) axial vorgespannt angeordnet ist, wobei die Vorspannung der Druckfeder (28) mittels einer Stellschraube (34) einstellbar ist.

10. Überströmventil nach Anspruch 8, **dadurch gekennzeichnet, dass** der Zylindereinsatz (18) axial fern von der Druckfeder (28) einen Widerlagerabschnitt (22) aufweist, dem ein Druckbegrenzer (20) mit einem Einlass (62) für das Fluid vorgeschaltet ist.

11. Überströmventil nach Anspruch 8 oder 10, **dadurch gekennzeichnet, dass** der Zylindereinsatz (18) zusammen mit dem Kolben (26) sowie der Druckbegrenzer (20) axial hintereinander in der topfförmigen Ausnehmung (16) des Gehäuses (12) angeordnet sind, und dass die ebenfalls topfförmige Abdeckung (36) zur Aufnahme der Druckfeder (28) die topfförmige Ausnehmung (16) des Gehäuses (12) deckelartig verschließt.

12. Überströmventil nach einem der Ansprüche 1 bis 11, **dadurch gekennzeichnet, dass** der Dichtring (42) aus einem Elastomer auf der Basis eines hydrierten Acrylnitrilbutadien-Kautschuks besteht.

## Claims

1. Overflow valve (10) for a gaseous fluid, for example in a compressed air-operated brake system of a motor vehicle, having a piston (26) which is prestressed by means of a compression spring (28) and is received in a cylinder (16, 18) of the overflow valve (10) such that it can be displaced along a longitudinal centre axis (14), **characterized in that** a sealing ring (42) for radial and axial sealing is arranged on a piston underside (40), that the radial outside (48) of the sealing ring (42) bears against the cylinder (16, 18) on the inside forming a radial press fit, that the sealing ring (42) bears against a hollow-cylindrical valve seat (44) in a closed state of the overflow valve (10) as a consequence of the prestress of the compression spring (28), and that the sealing ring (42) is raised up from the valve seat (44) forming an annular gap (82) in an open state of the overflow valve (10) after a predefined limit pressure of the fluid is exceeded, in order to release a flow path (84) for the fluid.

2. Overflow valve according to Claim 1, **characterized in that** the outside (48) of the sealing ring (42) has an approximately semicircular cross-section geometry.

3. Overflow valve according to Claim 1 or 2, **characterized in that** an annular groove (52) is formed at least in portions in the region of an underside (50) of the sealing ring (42).

4. Overflow valve according to any of Claims 1 to 3, **characterized in that** the piston (26) has at least one annular groove (46) which is configured coaxially to the longitudinal centre axis (14) and open towards the radial outside.

5. Overflow valve according to any of Claims 1 to 4, **characterized in that** the sealing ring (42) is formed as a circular ring and, by means of its radially inner circular opening (54), is received on a hollow cylindrical extension (56) of the piston (26) which (56) is formed in the region of the piston underside (40) and coaxially surrounds a piston rod (58) connected integrally with the piston (26).

6. Overflow valve according to Claim 5, **characterized in that** the radially inner opening (54) of the sealing ring (42) is surrounded at least in portions by a wedge-shaped or cuboid thickening (60).

7. Overflow valve according to any of Claims 1 to 6, **characterized in that** the cylinder in the overflow valve (10) is formed by a pot-like recess (16) in the housing (12) of the overflow valve (10).

8. Overflow valve according to any of Claims 1 to 6, **characterized in that** the cylinder in the overflow valve (10) is formed by a hollow cylindrical cylinder liner (18) which is coaxially inserted in a pot-like recess (16) in the housing (12) of the overflow valve (10).

9. Overflow valve according to any of Claims 1 to 8, **characterized in that** the compression spring (28) is arranged inside a cover (36) of the housing (12) of the overflow valve (10), and that the piston (26) is arranged axially prestressed by means of the compression spring (28), wherein the prestress of the compression spring (28) is adjustable by means of an adjustment screw (34).

10. Overflow valve according to Claim 8, **characterized in that** the cylinder liner (18) has an abutment portion (22) which is axially remote from the compression spring (28) and upstream of which a pressure limiter (20) with an inlet (62) for the fluid is connected.

11. Overflow valve according to Claim 8 or 10, **characterized in that** the cylinder liner (18) together with the piston (26) and the pressure limiter (20) are arranged axially in succession in the pot-like recess (16) of the housing (12), and that the similarly pot-like cover (36) for receiving the compression spring (28) closes the pot-like recess (16) of the housing (12) in the manner of a lid.

12. Overflow valve according to any of Claims 1 to 11, **characterized in that** the sealing ring (42) consists of an elastomer based on a hydrogenated acrylonitrile butadiene rubber.

## Revendications

1. Soupape de trop-plein (10) pour un fluide gazeux, par exemple dans un système de freinage commandé par air sous pression d'un véhicule automobile, comprenant un piston (26) précontraint au moyen d'un ressort de compression (28), qui est reçu de manière déplaçable le long d'un axe médian longitudinal (14) dans un cylindre (16, 18) de la soupape de trop-plein (10), **caractérisée en ce qu'**une bague d'étanchéité (42) pour l'étanchéité radiale et axiale est disposée au niveau d'un côté inférieur du piston (40), **en ce que** le côté extérieur radial (48) de la bague d'étanchéité (42) s'applique du côté intérieur contre le cylindre (16, 18) en créant un ajustement serré radial, **en ce que** la bague d'étanchéité (42), dans un état fermé de la soupape de trop-plein (10), du fait de la précontrainte du ressort de compression (28), s'applique contre un siège de soupape cylindrique creux (44) et **en ce que** la bague d'étanchéité (42), dans un état ouvert de la soupape de trop-plein (10), après qu'une pression limite prédéfinie de fluide a été dépassée, est soulevée du siège de soupape (44) en formant un espace annulaire (82) afin de libérer une voie d'écoulement (84) pour le fluide.

2. Soupape de trop-plein selon la revendication 1, **caractérisée en ce que** le côté extérieur (48) de la bague d'étanchéité (42) présente une géométrie de forme approximativement semi-circulaire en section transversale.

3. Soupape de trop-plein selon la revendication 1 ou 2, **caractérisée en ce qu'**une rainure annulaire (52) est réalisée au moins en partie dans la région d'un côté inférieur (50) de la bague d'étanchéité (42).

4. Soupape de trop-plein selon l'une quelconque des revendications 1 à 3, **caractérisée en ce que** le piston (26) présente au moins une rainure annulaire (46) réalisée coaxialement par rapport à l'axe médian longitudinal (14) et ouverte radialement vers l'extérieur.

5. Soupape de trop-plein selon l'une quelconque des revendications 1 à 4, **caractérisée en ce que** la bague d'étanchéité (42) est réalisée sous forme de bague circulaire et est reçue, au moyen de son ouverture circulaire (54) réalisée radialement à l'intérieur, sur une saillie (56) cylindrique creuse du piston (26), laquelle la saillie (56) est réalisée dans la région du côté inférieur du piston (40) et entoure coaxialement une tige de piston (58) connectée d'une seule pièce au piston (26) .

6. Soupape de trop-plein selon la revendication 5, **caractérisée en ce que** l'ouverture radialement interne (54) de la bague d'étanchéité (42) est entourée au moins en partie par un épaississement (60) en forme de coin ou de quadrilatéral.

7. Soupape de trop-plein selon l'une quelconque des revendications 1 à 6, **caractérisée en ce que** le cylindre dans la soupape de trop-plein (10) est formé par un évidement en forme de pot (16) dans le boîtier (12) de la soupape de trop-plein (10).

8. Soupape de trop-plein selon l'une quelconque des revendications 1 à 6, **caractérisée en ce que** le cylindre dans la soupape de trop-plein (10) est formé par un insert cylindrique creux (18) qui est inséré coaxialement dans un évidement en forme de pot (16) du boîtier (2) de la soupape de trop-plein (10).

9. Soupape de trop-plein selon l'une quelconque des revendications 1 à 8, **caractérisée en ce que** le ressort de compression (28) est disposé à l'intérieur d'un recouvrement (36) du boîtier (12) de la soupape de trop-plein (10), et **en ce que** le piston (26) est disposé de manière précontrainte axialement au moyen du ressort de compression (28), la précontrainte du ressort de compression (28) pouvant être ajustée au moyen d'une vis de réglage (34).

10. Soupape de trop-plein selon la revendication 8, **caractérisée en ce que** l'insert cylindrique (18) présente, axialement à distance du ressort de compression (28), une portion de butée (22) en amont de laquelle est monté un limiteur de pression (20) avec une entrée (62) pour le fluide.

11. Soupape de trop-plein selon la revendication 8 ou 10, **caractérisée en ce que** l'insert cylindrique (18), conjointement avec le piston (26) ainsi que le limiteur de pression (20), sont disposés axialement les uns derrière les autres dans l'évidement en forme de pot (16) du boîtier (12), et **en ce que** le recouvrement également en forme de pot (36), pour recevoir le ressort de compression (28), ferme à la manière d'un couvercle l'évidement en forme de pot (16) du boîtier (12).

12. Soupape de trop-plein selon l'une quelconque des revendications 1 à 11, **caractérisée en ce que** la bague d'étanchéité (42) se compose d'un élastomère à base de caoutchouc acrylonitrile-butadiène hydrogéné.
